# EUROPÄISCHE PATENTSCHRIFT

(11) **EP 1 542 554 B1**
(45) Veröffentlichungstag und Bekanntmachung des Hinweises auf die Patenterteilung: **15.03.2006**
(21) Anmeldenummer: 02785041.1
(22) Anmeldetag: 27.09.2002
(51) Int. Cl.: A23N 7/04, A23N 7/10, B65G 35/00

(54) **VORRICHTUNG ZUM SCHÄLEN VON STANGENFÖRMIGEN GEMÜSE**
DEVICE FOR PEELING ELONGATED VEGETABLES
DISPOSITIF POUR EPLUCHER DES LEGUMES DE FORME ALLONGEE

(43) Veröffentlichungstag der Anmeldung: 22.06.2005
(73) Patentinhaber: Hepro GmbH, 33106 Paderborn (DE)
(72) Erfinder: PROTTE, Christoph, 33129 Delbrück (DE)
(74) Vertreter: Ostermann, Thomas
(86) Internationale Anmeldenummer: PCT/DE2002/003660
(87) Internationale Veröffentlichungsnummer: WO 2004/030474

(56) Entgegenhaltungen:
- DE-A- 19 932 966
- DE-C- 4 412 561
- DE-C- 19 608 195
- FR-A- 1 382 890
- GB-A- 1 416 875
- US-A- 4 212 237

## Beschreibung

Die Erfindung betrifft eine Vorrichtung zum Schälen von stangenförmigem Gemüse mit einer Mehrzahl von in Transportrichtung des Gemüses wechselweise angeordneten Transportwalzen-Paaren und Messerstationen, wobei die Transportwalzen-Paare mit einer Antriebseinheit verbunden sind, so dass mindestens eine Transportwalze des Transportwalzen-Paares drehbar um die eigene Achse antreibbar ist.

Aus der DE 196 08 195 C1 ist eine Vorrichtung zum Schälen von stangenförmigem Gemüse bekannt, bei der Transportwalzen-Paare und Messerstationen wechselweise in Transportrichtung des Gemüses angeordnet sind. Die Transportwalzen-Paare dienen zum Erfassen und Führen des stangenförmigen Gemüses entlang eines vorgegebenen Transportweges. Die Messerstationen dienen zum Schälen des Gemüses. Um ein gleichmäßiges Schälen entlang der Umfangsfläche des Gemüses zu ermöglichen, sind die Transportwalzen-Paare und Messerstationen in Transportrichtung wechselweise angeordnet. Die Transportwalzen-Paare sind zu Transportwalzen-Paaren zusammengefasst, wobei die Transportwalzen jeweils aus einem weichelastischen Material gefertigt und mit einer Welle versehen sind. Die Welle der Transportwalze ist mit einer Antriebseinheit verbunden, so dass sie drehbar angetrieben ist.

Um einen universellen Einsatz der Vorrichtung, insbesondere die Behandlung von Gemüse unterschiedlichen Durchmessers, zu gewährleisten, ist die Welle der Transportwalze drehbar an einem Schwenkarm gelagert, der seinerseits schwenkbar an einer feststehenden zweiten Achse gelagert ist. Die Verlängerung der Welle bzw. Achse ist jeweils mit Antriebsrädern verbunden, so dass durch Betätigung des Schwenkarmes der Abstand von zwei Transportwalzen eines Transportwalzen-Paares zueinander einstellbar ist. Nachteilig an der bekannten Vorrichtung, die sich grundsätzlich bewährt hat, ist, dass in Abhängigkeit von dem Durchmesser des stangenförmigen Gemüses, beispielsweise von Spargel, Karotten etc., der Abstand der Transportwalzen eines Transportwalzen-Paares vorzugsweise manuell voreingestellt werden muss.

Aufgabe der vorliegenden Erfindung ist es, eine Vorrichtung zum Schälen von stangenförmigem Gemüse derart weiterzubilden, dass die Universalität der Behandlung von stangenförmigen Gemüses unterschiedlichen Typs und unterschiedlicher Größe verbessert wird.

Zur Lösung dieser Aufgabe ist die Erfindung in Verbindung mit dem Oberbegriff des Patentanspruchs 1 dadurch gekennzeichnet, dass mindestens eine Transportwalze des Transportwalzen-Paares eine Welle aufweist, die mit der Antriebseinheit über eine Kupplungseinheit verbunden ist, derart, dass die Transportwalze quer zur Transportrichtung beweglich ausgebildet ist.

Der besondere Vorteil der Erfindung besteht darin, dass durch die Ankoppelung einer Welle der Transportwalze an die Antriebseinheit über eine Kupplungseinheit die Transportwalzen selbsttätig quer zur Transportrichtung nachgiebig ausgebildet sind. Dadurch kann stangenförmiges Gemüse gegebenenfalls unterschiedlichen Typs in einem relativ großen Durchmesserbereich transportiert bzw. den Messerstationen zugeführt werden, ohne dass die Gefahr eines Bruchs des Gemüses besteht. Grundgedanke der Erfindung ist es, die Transportwalze nicht starr in ihrer Erstreckungsrichtung zu halten, sondern die Transportwalze quer zu ihrer Erstreckungsrichtung beweglich zu lagern. Auf diese Weise wird ermöglicht, dass sich die Vorrichtung selbsttätig auf die unterschiedlichen Formen bzw. Größen des Gemüses im Sinne eines schonenden Transportes einstellen kann.

Nach einer besonderen Ausführungsform der Erfindung ist die Kupplungseinheit als spielfreie Wellenkupplung ausgebildet, so dass auf einfache Weise eine Kopplung der Welle der Transportwalze mit einer Abtriebswelle der Antriebseinheit geschaffen ist, wobei zum einen eine Übertragung von Drehkräften und zum anderen ein Wellenversatz in einem vorgegebenen Winkelbereich gewährleistet ist. Die Verschwenkbarkeit der Transportwalzenwelle in einem Raumwinkelbereich um eine Achse, die koaxial zu der Abtriebswelle der Antriebseinheit verläuft, wird durch ein flexibles Verbindungsteil der Kupplung ermöglicht. Das Verbindungsteil dient zur Verbindung von zwei Kupplungssegmenten der Kupplung und ist jeweils mit einem Kupplungssegment formschlüssig verbunden. Das erste Kupplungssegment ist mit einem Ende der Transportwalzenwelle und das zweite Kupplungssegment ist mit einem Ende der Antriebswelle verbunden. Obwohl infolge der geradlinigen Transportrichtung eine Verschwenkbarkeit der Transportwalzen senkrecht zur Transportrichtung ausreichend ist, ermöglicht die Verschwenkbarkeit der Transportwalzen im Raum mit einer Komponente, die einen spitzen Winkel zur Transportrichtung bildet, ein schonendes Erfassen bzw. Weitertransportieren einer nicht geradförmigen Gemüsestange. Um einen geradlinigen Transport der Gemüsestange zu ermöglichen, sind vorzugsweise zwei Transportwalzen-Paare unmittelbar nacheinander angeordnet.

Nach einer Weiterbildung der Erfindung weisen sowohl das erste und zweite Kupplungssegment sowie das Verbindungsteil der Kupplungseinheit eine Verzahnung auf, so dass eine sichere Drehübertragung von der Abtriebswelle der Antriebseinheit zu der Welle der Transportwalze gewährleistet ist.

Nach einer Weiterbildung der Erfindung ist das Verbindungsteil als eine flexible oder nachgiebige Hülse ausgebildet, die das erste und zweite Kupplungssegment bereichsweise umgreift. Die axiale Länge der Kupplungssegmente bzw. der Hülse ist derart gewählt, dass die Kupplungssegmente in einem vorgegebenen Abstand zueinander angeordnet sind. Hierdurch wird ein Verschwenken der Transportwalzenwelle relativ zur Abtriebswelle ermöglicht. Durch die Wahl des Abstandes der Kupplungssegmente zueinander kann der maximale Verschwenkwinkel vorgegeben werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1:: Einen Querschnitt durch ein erfindungsgemäßes Transportwalzen-Paar in Transportrichtung,
- Figur 2:: eine perspektivische Darstellung einer erfindungsgemäßen Vorrichtung mit in Transportrichtung wechselweise angeordneten Transportwalzen-Paaren und nicht dargestellten Messerstationen,
- Figur 3:: eine Seitenansicht von zwei unmittelbar in Transportrichtung hintereinander angeordneten Transportwalzen-Paaren,
- Figur 4:: eine Vorderansicht eines Transportwalzen-Paares,

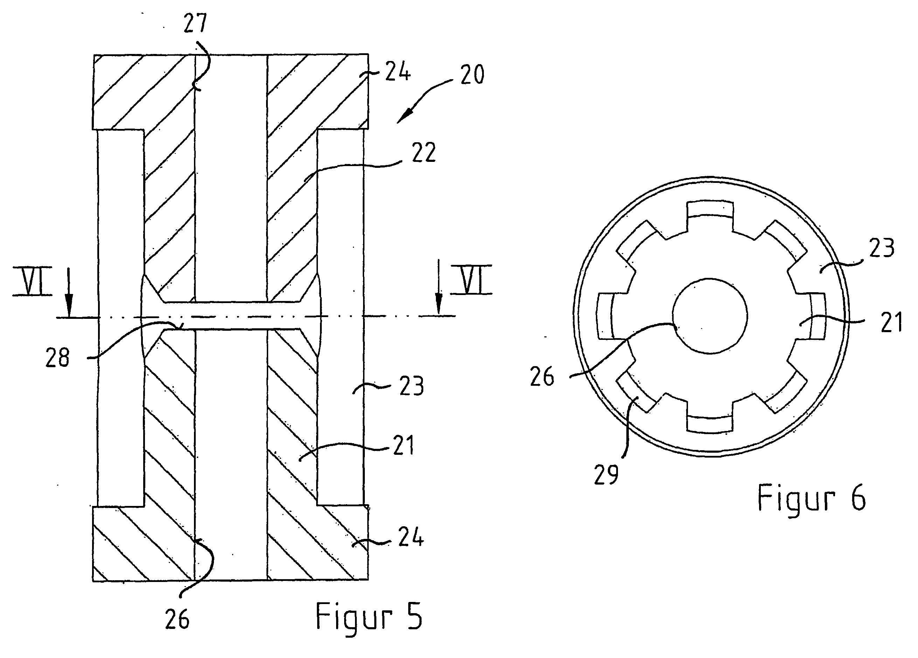

- Figur 5:: einen Längsschnitt durch eine Kupplungseinheit,
- Figur 6:: einen Querschnitt durch die Kupplungseinheit entlang der Schnittlinie VI-VI in Figur 5,
- Figur 7:: einen Querschnitt durch ein erfindungsgemäßes Transportwalzenpaar in Transportrichtung mit einer Anpresskrafteinheit nach einer zweiten Ausführungsform und
- Figur 8:: eine perspektivische Darstellung einer Messerstation, die in Transportrichtung zwischen den in Figur 2 dargestellten zwei paarweise angeordneten Transportwalzen angeordnet ist.

Die erfindungsgemäße Vorrichtung zum Schälen von stangenförmigem Gemüse kann vorzugsweise zum Schälen von Minikarotten mit einem Durchmesserbereich von 5 bis 30 mm eingesetzt werden. Darüber hinaus können auch andere Gemüsesorten, wie zum Beispiel Spargel etc. mittels dieser Vorrichtung geschält werden.

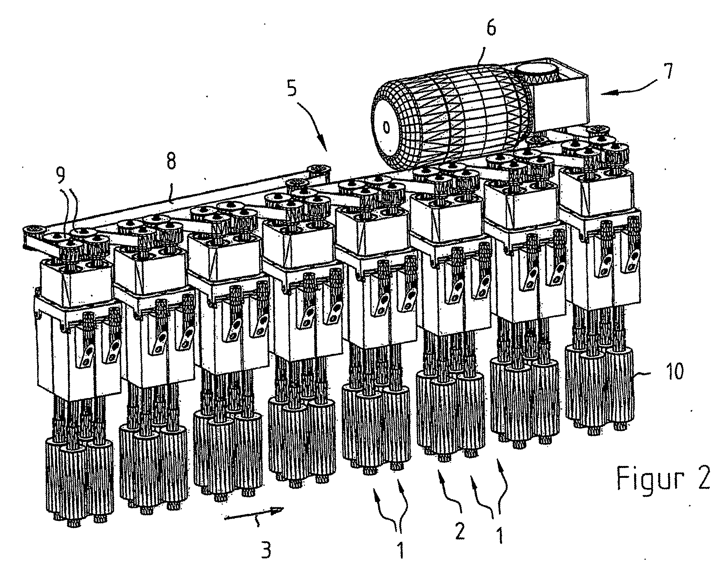

Die erfindungsgemäße Vorrichtung besteht im wesentlichen aus einer Mehrzahl von Transportwalzen-Paaren 1 und Messerstationen 2, die in Transportrichtung 3 des Gemüses wechselweise bzw. abwechselnd zueinander angeordnet sind, siehe Figur 2. Zur sicheren Führung des Gemüses in Transportrichtung 3 sind die als Transportwalzen-Paare ausgebildeten Transportwalzen-Paare 1 paarweise in Transportrichtung 3 angeordnet.

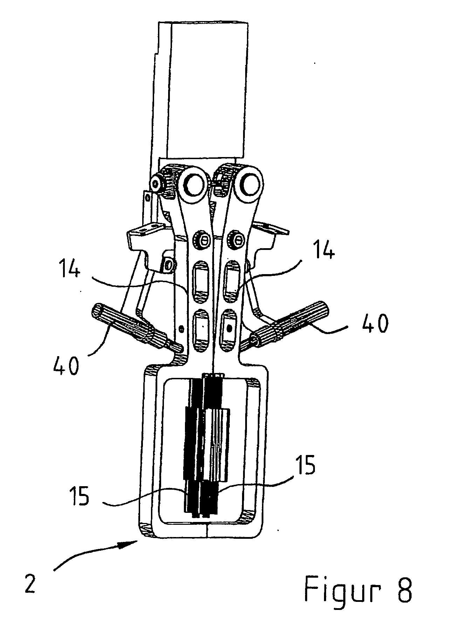

Die in Figur 8 dargestellte Messerstation ist in Transportrichtung 3 zwischen zwei Transportwalzen-Paaren 1 angeordnet. Die Messerstationen 2 bestehen in üblicher Weise aus einem Messerträger 14, an dessen Enden Messerklingen 15 beweglich angeordnet sind. An den Messerträgern 14 ist seitlich eine Druckeinheit 40 zum Zentrieren der Messerträger 14 angeordnet.

Die Transportwalzen-Paare 1 und die Messerstationen 2 sind an einem Maschinengestell 4 gelagert, wobei sich im wesentlichen oberhalb der Transportwalzen-Paare 1 eine Antriebseinheit 5 anschließt. Die Antriebseinheit 5 umfasst einen Elektromotor 6, der über ein Getriebe 7 einen Endlosriemen 8 antreibt. Der Endlosriemen 8 steht zumindest mit einem jeweils einer Transportwalze 10 zugeordneten Riemenrad 9 eines Transportwalzen-Paares 1 in Eingriff. Das Riemenrad 9 ist fest mit einer Antriebswelle 11 verbunden, an der sich in axialer Richtung eine Welle 12 der Transportwalze 10 anschließt. Zum schonenden Erfassen und Weitertransport der Gemüsestangen weist jede Transportwalze 10 einen aus einem elastischen bzw. weichelastischen Material bestehenden axialen Überzug 13 auf.

Die Welle 12 der Transportwalze 10 ist über Kugellager 16 drehbar in einem Transportwalzenhalteteil 17 gelagert. Die Antriebswelle 11 der Antriebseinheit 5 ist über Kugellager 18 in einem quaderförmigen Lagerbock 19 gelagert.

Zur Übertragung des Drehmoments von der Antriebswelle 11 der Antriebseinheit 5 auf die Welle 12 der Transportwalze 10 ist eine Kupplungseinheit 20 vorgesehen, das aus einem kraftschlüssig mit einem Ende der Welle 12 verbundenen ersten Kupplungssegment 21, einem kraftschlüssig mit einem Ende der Antriebswelle 11 verbundenen zweiten Kupplungssegment 22 und einem drehfest mit den dem ersten Kupplungssegment 21 und dem zweiten Kupplungssegment 22 verbundenen flexiblen Verbindungsteil 23 besteht. Das erste Kupplungssegment 21 und das zweite Kupplungssegment 22 weisen einen zu der Welle 12 bzw. Antriebswelle 11 orientierten radialen Absatz 24 auf, der eine Bohrung 25 mit einem Innengewinde aufweist zur klemmenden Verbindung mit der Welle 12 bzw. der Antriebswelle 11 mittels einer Schraube. Zu diesem Zweck sind die Enden der Welle 12 bzw. der Antriebswelle 11 in eine axiale Aufnahme 26 und 27 des ersten Kupplungssegmentes 21 bzw. des zweiten Kupplungssegmentes 22 eingeführt. Die Enden der Welle 12 bzw. der Antriebswelle 11 erstrecken sich innerhalb des größten Bereiches der axialen Aufnahme 26, 27, ohne allerdings bündig mit der axialen Randfläche der Kupplungssegmente 21, 22 abzuschließen.

Sowohl das Verbindungsteil 23 als auch das erste Kupplungssegment 21 und das zweite Kupplungssegment 22 weisen eine in Umfangsrichtung verlaufende Verzahnung 29 auf, so dass das Verbindungsteil 23 reibschlüssig und drehfest auf mit Kupplungssegmenten 21 und 22 verbunden ist.

Die Kupplungssegmente 21 und 22 sind jeweils als mit der Bohrung 26, 27 versehene Scheiben ausgebildet, die auf einer zueinandergekehrten Seite mit einem Zahnkranzansatz versehen sind. Dieser Zahnkranzansatz steht in Eingriff mit einer radialen Innenverzahnung des Verbindungselementes 23.

Die Länge des als eine das erste Kupplungssegment 21 und das zweite Kupplungssegment 22 umgreifende Hülse ausgebildete Verbindungsteil 23 ist derart gewählt, dass zwischen den zueinander gekehrten axialen Randflächen der Kupplungssegmente 21 und 22 ein Zwischenraum 28 gebildet ist. Dadurch, dass die Hülse 23 flexibel ausgebildet ist, kann beim Erfassen bzw. Weitertransport der Gemüsestange eine Transportwalze 10 oder können beide Transportwalzen 10 der Transportwalzen-Paare 1 eine Seitwärtsbewegung quer zur Transportrichtung 3 vollziehen, so dass Gemüsestangen unterschiedlichen Durchmessers oder Formgebung selbsttätig auf schonende Weise erfasst und weitertransportiert werden können.

Dadurch, dass die Kupplungseinheit 20 rotationssymmetrisch ausgebildet ist, ist die Transportwalze 10 in der Lage, eine Ausgleichsbewegung in einem vorgewählten Raumwinkelbereich um die axiale Verlängerung der Antriebswelle 11 auszuüben. Dadurch, dass jeder Transportwalze 10 eine Kupplungseinheit 20 zugeordnet ist, ist eine zentrierte Führung der Gemüsestangen gewährleistet.

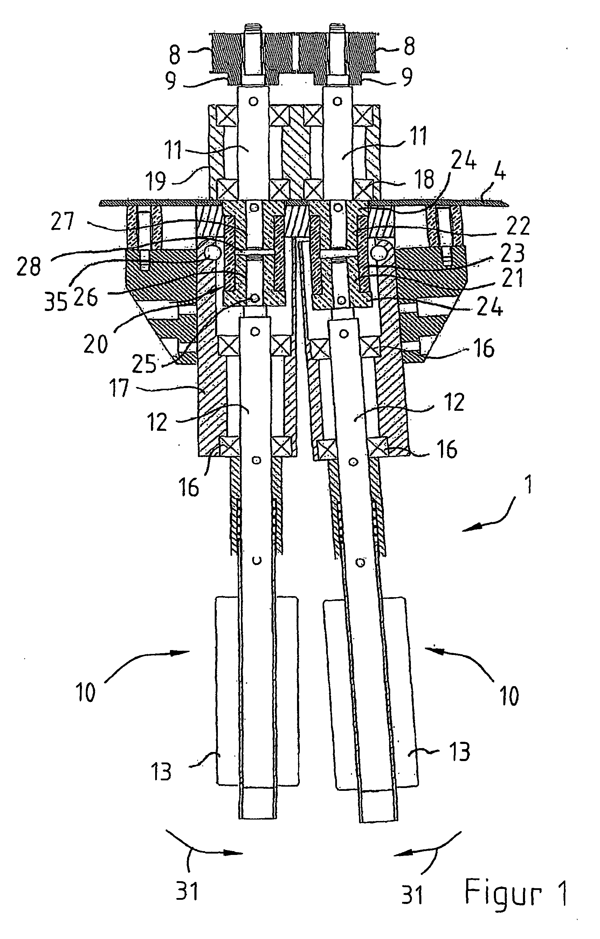

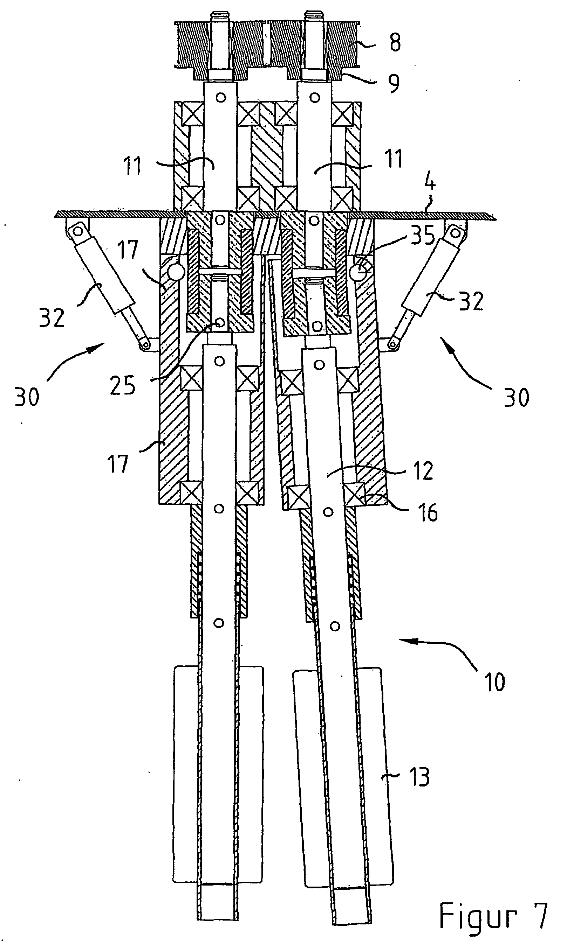

Damit die Transportwalzen 10 eines Transportwalzen-Paares 1 mit einer vorgewählten Anpresskraft auf die Gemüsestangen wirken, ist eine Anpresskrafteinheit 30 vorgesehen, die auf das Transportwalzenhalteteil 17 derart einwirkt, dass eine senkrecht zur Transportrichtung 3 wirkende Haltekraft 31 erzeugt wird. Die Anpresskrafteinheit 30 kann beispielsweise als hydraulische oder pneumatische Kolben-Zylinder-Einheit 32 (Figur 7) oder als eine vorgespannte Feder 33 (Figur 1) ausgebildet sein. Die Anpresskrafteinheit 30 greift zum einen an dem Transportwalzenhalteteil 17 und zum anderen an dem Maschinengestell 4 an.

Den Transportwalzen-Paaren 1 ist jeweils ein Sensor zugeordnet zur Positionsermittlung der Gemüsestange. Der Sensor ist mit einer nicht dargestellten Steuereinheit verbunden, so dass in Abhängigkeit von der Position des in Transportrichtung 3 vorderen Endes der Gemüsestange die in Transportrichtung 3 nachfolgende Messerstation 2 zum Schälen der Gemüsestange betätigt werden kann.

Zusätzlich kann als Messerstation auch eine Schneideinrichtung vorgesehen sein, die die Gemüsestange an den jeweiligen Enden kürzt, dass heißt einen Schnitt quer zur Transportrichtung 3 vollzieht. Um beispielsweise einen Blätteransatz einer Mohrrübe in einer vorgewählten Länge von beispielsweise 15 bis 20 mm abzuschneiden, kann die Position der Mohrrübe beim Durchleiten durch die Transportwalzen-Paare 1 mittels eines weiteren Sensors ermittelt werden und durch die Steuereinheit in Abhängigkeit von der Transportgeschwindigkeit die entsprechende Messerstation zum Abschneiden des vorderen und/oder hinteren Endes der Mohrrübe angesteuert werden.

Um ein beschädigungsfreies Transportieren der Gemüsestange durch das Transportwalzen-Paar 1 zu gewährleisten, ist jeder Transportwalze 10 ein Freilauf zugeordnet. Auf diese Weise können Differenzen bei der Umfangsgeschwindigkeit der Transportwalzen 10 eines Transportwalzen-Paares 1 ausgeglichen werden.

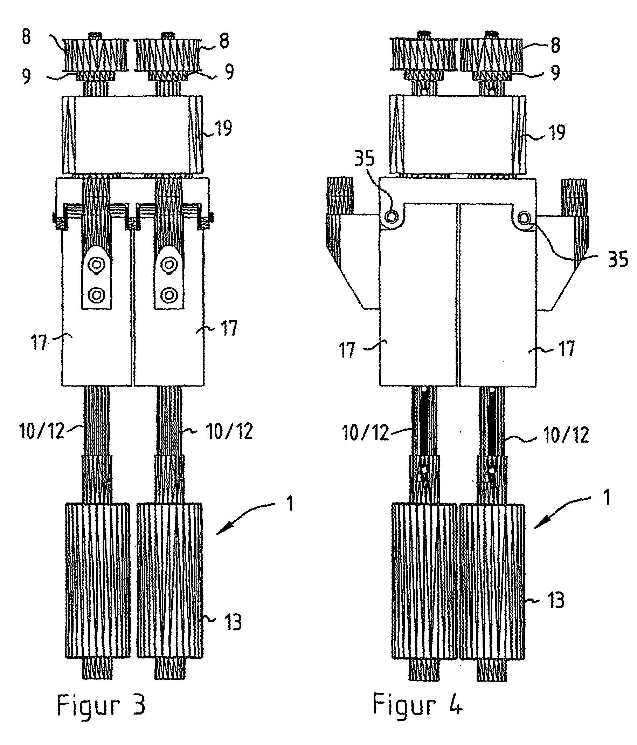

Die Funktionsweise der Kupplungseinheit 20 ist folgende: Die Transportwalzen 10 bzw. die Wellen 12 eines Transportwalzen-Paares 1 erstrecken sich in einer Ausgangslage gemäß Figur 3 und 4 parallel zueinander in vertikaler Richtung. Wird dem Transportwalzen-Paar 1 ein stangenförmiges Gemüseteil zugeführt, wird dasselbe durch den nachgiebigen Überzug 13 der Transportwalze 10 erfasst. Weist das Gemüseteil einen relativ großen Durchmesser auf, bewegen sich beide Wellen 12 bzw. Transportwalzen 10 des Transportwalzen-Paares 1 um ein Gelenk 35 quer zur Transportrichtung 3 nach außen. In Figur 1 ist lediglich beispielhaft eine Transportwalze 10 in einer Transportposition dargestellt, während die andere Transportwalze 10 in der vertikalen Ausgangsposition angeordnet ist. Eine solche Ausgleichsbewegung um das Gelenk 35 wird ermöglicht durch die flexible oder elastische Ausgestaltung der Hülse 23 der Kupplungseinheit 20. Die Anpresskrafteinheit 30 bewirkt eine auf die Gemüsestange ausreichende Haltekraft 31 für den Weitertransport.

Im vorliegenden Ausführungsbeispiel sind die zueinander gekehrten Enden der Kupplungssegmente 21 und 22 beabstandet zueinander angeordnet. Alternativ können diese Enden der Kupplungssegmente 21 und 22 auch konvex- oder konkavförmig ausgebildet sein, so dass sie entsprechend einer KugelPfanne-Verbindung unmittelbar aneinander liegen und eine Querbewegung ausführen können.

Nachdem das Gemüseteil durch das Transportwalzen-Paar 1 hindurchgefördert worden ist, bewirkt die Anpresskrafteinheit 30 ein Zurückbewegen der Transportwalzen 10 aus der Transportposition in die Ausgangsposition.

## Patentansprüche

1. Vorrichtung zum Schälen von stangenförmigem Gemüse mit einer Mehrzahl von in Transportrichtung des Gemüses wechselweise angeordneten Transportwalzen-Paaren und Messerstationen, wobei die Transportwalzen-Paare mit einer Antriebseinheit verbunden sind, so dass mindestens eine Transportwalze des Transportwalzen-Paares drehbar um die eigene Achse antreibbar ist, **dadurch gekennzeichnet, dass** mindestens eine Transportwalze (10) des Transportwalzen-Paares (1) eine Welle (12) aufweist, die mit der Antriebseinheit (5) über eine Kupplungseinheit (20) verbunden ist, derart, dass die Transportwalze (10) quer zur Transportrichtung (3) beweglich ausgebildet ist.

2. Vorrichtung nach Anspruch 1, **dadurch gekennzeichnet, dass** die Kupplungseinheit (20) als eine spielfreie Wellenkupplung mit einem flexiblen Verbindungsteil (23) ausgebildet ist.

3. Vorrichtung nach Anspruch 1 oder 2, **dadurch gekennzeichnet, dass** die Welle (12) der Transportwalze (10) über die Kupplungseinheit (20) mit einer axial feststehenden Antriebswelle (11) der Antriebseinheit (5) derart gekoppelt ist, so dass die Welle (12) entsprechend eines vorgegebenen Axialversatzes quer zur Transportrichtung (3) bewegbar ist.

4. Vorrichtung nach einem der Ansprüche 1 bis 3, **dadurch gekennzeichnet, dass** die Kupplungseinheit (20) zum einen ein erstes Kupplungssegment (21) zur kraftschlüssigen und/oder formschlüssigen Verbindung mit einem Ende der Welle (12) und ein zweites Kupplungssegment (22) zur kraftschlüssigen und/oder formschlüssigen Verbindung mit einem Ende der Antriebswelle (11) und zum anderen das flexible Verbindungsteil (23) als eine das erste Kupplungssegment (21) und das zweite Kupplungssegment (22) umgreifende Hülse umfasst.

5. Vorrichtung nach einem der Ansprüche 1 bis 4, **dadurch gekennzeichnet, dass** die zueinander gekehrten Enden des ersten Kupplungssegments (21) und des zweiten Kupplungssegments (22) beabstandet zueinander angeordnet sind.

6. Vorrichtung nach einem der Ansprüche 1 bis 5, **dadurch gekennzeichnet, dass** das erste Kupplungssegment (21) und das zweite Kupplungssegment (22) hohlförmig ausgebildet sind mit jeweils einer Aufnahme (26, 27) für das Ende der Welle (12) bzw. das Ende der Antriebswelle (11).

7. Vorrichtung nach einem der Ansprüche 1 bis 6, **dadurch gekennzeichnet, dass** das erste Kupplungssegment (21) und das zweite Kupplungssegment (22) jeweils an einem zu dem gegenüberliegenden Kupplungssegment (21, 22) abgewandten Ende einen radialen Absatz (24) aufweisen, zwischen denen die Hülse (23) gelagert ist, und dass die Länge der Hülse (23) derart gewählt ist, dass das erste Kupplungssegment (21) und das zweite Kupplungssegment (22) in einem vorgegebenen Abstand zueinander gelagert sind.

8. Vorrichtung nach einem der Ansprüche 1 bis 7, **dadurch gekennzeichnet, dass** die äußere Mantelfläche des ersten Kupplungssegmentes (21) und des zweiten Kupplungssegmentes (22) einerseits und die innere Mantelfläche der Hülse (23) andererseits eine zueinander korrespondierende Verzahnung (29) aufweisen, derart, dass die Drehbewegung der Antriebswelle (11) spielfrei über die Hülse (23) auf die Welle (12) der Transportwalze (10) übertragbar ist.

9. Vorrichtung nach einem der Ansprüche 1 bis 8, **dadurch gekennzeichnet, dass** die Hülse (23) flexibel und/oder elastisch ausgebildet ist.

10. Vorrichtung nach einem der Ansprüche 1 bis 9, **dadurch gekennzeichnet, dass** den Transportwalzen (10) eines Transportwalzen-Paares (1) jeweils eine Kupplungseinheit (20) zugeordnet ist, so dass die Transportwalzen (10) durch das geförderte Gemüse gleichmäßig auseinander bewegbar sind.

11. Vorrichtung nach einem der Ansprüche 1 bis 10, **dadurch gekennzeichnet, dass** jeder Transportwalze (10) eine mechanische oder pneumatische Anpresskrafteinheit (30) zugeordnet ist.

12. Vorrichtung nach einem der Ansprüche 1 bis 11, **dadurch gekennzeichnet, dass** die Anpresskrafteinheit (30) eine Kolben-Zylinder-Einheit (32) oder eine vorgespannte Feder (33) umfasst.

13. Vorrichtung nach einem der Ansprüche 1 bis 12, **dadurch gekennzeichnet, dass** dem Transportwalzen-Paar (1) mindestens ein Sensor zugeordnet ist zur Erzeugung eines an eine Steuereinheit abgebbares Sensorsignal, derart, dass eine nachgeordnete Messereinheit zum Schälen der Gemüsestange betätigt wird und/oder dass eine nachgeordnete Messereinheit (2) zum Abschneiden eines vorderen und/oder hinteren Endes der Gemüsestange angesteuert wird.

## Claims

1. Device for peeling elongated vegetables having a plurality of transport roller pairs and knife stations alternately arranged in transport direction, said transport roller pairs being in connection with a drive unit such that at least one roller of said transport roller pair can be driven to rotate about its own axis, **characterized by** the fact that at least one transport roller (10) of the transport roller pair (1) is fitted with a shaft (12) connected to the drive unit (5) via a coupling (20) in such a way that said transport roller (10) is movable cross to the transport direction (3).

2. Device according to Claim 1, **characterized by** the fact that the coupling unit (20) is a shaft coupling with no backlash and having a flexible connecting member (23).

3. Device according to Claim 1 or 2, **characterized by** the fact that the shaft (12) of the transport roller (10) is coupled to an axially fixed drive shaft (11) of the drive unit (5) via said coupling unit (20) in a way permitting the shaft (12) to move cross to the transport direction (3) to an extent as predetermined by an axial offset.

4. Device according to any of the preceding Claims 1 to 3, **characterized by** the fact that on the one hand said coupling unit (20) comprises a first coupling segment (21) for positive and/or non-positive connection to one end of the shaft (12) and a second coupling segment (22) for positive or non-positive connection to one end of the drive shaft (11) and that on the other hand the flexible connecting member (23) is provided in the form of a sleeve surrounding the first and the second coupling segment (21 and (22), respectively.

5. Device according to any of the preceding Claims 1 to 4, **characterized by** the fact that the opposing ends of the first coupling segment (21) and the second coupling segment (22) are spaced apart.

6. Device according to any of the preceding Claims 1 to 5, **characterized by** the fact that the first coupling segment (21) and the second coupling segment (22) are hollow and provided with one receiving section (26, 27) each to accommodate the end of the shaft (12) and/or the end of the drive shaft (11).

7. Device according to any of the Claims 1 to 6, **characterized by** the fact that the first coupling segment (21) and the second coupling segment (22) are each provided with a radial offset portion (24) at an end facing away from the opposite coupling segment (21, 22) with a sleeve (23) disposed there between and that the length of said sleeve (23) is such that the first coupling segment (21) and the second coupling segment (22) are spaced a predetermined distance apart.

8. Device according to any of the preceding Claims 1 to 7, **characterized by** the fact that the outer surface area of the first coupling segment (21) and the second coupling segment (22) on one hand and the inner surface area of the sleeve (23) on the other hand are provided with a mating gear system (29) such that the rotational movements of the drive shaft (11) can be transmitted to the shaft (12) of the transport roller (10) without backlash.

9. Device according to any of the preceding Claims 1 to 8, **characterized by** the fact that the sleeve (23) is flexible and/or elastic.

10. Device according to any of the preceding claims 1 to 9, **characterized by** the fact that the transport rollers (10) of any transport roller pair (1) are each provided with a coupling unit (20) such that the transport rollers (10) can be uniformly moved apart by the vegetable.

11. Device according to any of the preceding claims 1 to 10, **characterized by** the fact that a mechanical or pneumatic contact pressure generating unit (30) is allocated to each of the transport rollers (10).

12. Device according to any of the preceding claims 1 to 11, **characterized by** the fact that said contact pressure generating unit (30) is a piston-cylinder unit (32) or a preloaded spring (33).

13. Device according to any of the preceding claims 1 to 12, **characterized by** the fact that at least one sensor is provided for the transport roller pair (1) to generate a sensor signal which is to be given out to a control unit such that a downstream knife unit will be actuated for peeling the elongated vegetable and/or that a downstream knife unit (2) will be actuated to cut off a forward or rear end of the elongated vegetable.

## Revendications

1. Dispositif pour éplucher des légumes de forme allongée, avec plusieurs paires de rouleaux de transport disposés alternativement dans la direction de transport des légumes, et des postes de couteaux, les paires de rouleaux de transport étant reliés à une unité de commande, de sorte qu'au moins un rouleau de transport de la paire de rouleaux de transport puisse être entrainée en rotation autour de son propre axe,
**caractérisé en ce que**
au moins un rouleau de transport (10) de la paire de rouleaux (1) présente un arbre (12) qui est relié à l'unité de commande (5) par l'intermédiaire d'une unité de couplage (20) de telle manière que le rouleau de transport (10) soit mobile perpendiculairement à la direction de transport (3).

2. Dispositif selon la revendication 1,
**caractérisé en ce que**
l'unité de couplage (20) est conçue en tant qu'accouplement d'arbre exempt de jeu avec un élément de liaison flexible (23).

3. Dispositif selon la revendication 1 ou 2,
**caractérisé en ce que**
L'arbre (12) du rouleau de transport (10) est couplé avec un arbre de commande (11) axialement fixe de l'unité de commande (5), par l'intermédiaire de l'unité de couplage (20), de telle manière que l'arbre (12) peut être déplacé transversalement à la direction de transport (3) conformément à un décalage axial prédéterminé.

4. Dispositif selon l'une des revendications 1 à 3,
**caractérisé en ce que**
l'unité de couplage (20) comprend, d'une part, un premier segment de couplage (21) pour la liaison par adhérence et / ou par engagement géométrique à une extrémité de l'arbre (12) et un deuxième segment de couplage (22) pour la liaison par adhérence et / ou par engagement géométrique à une extrémité de l'arbre de commande (11), et, d'autre part, l'élément de liaison flexible (23) en forme de douille qui embrasse le premier segment de couplage (21) et le deuxième segment de couplage (22).

5. Dispositif selon l'une des revendications 1 à 4,
**caractérisé en ce que**
les extrémités orientées l'une vers l'autre du premier segment de couplage (21) et du deuxième segment de couplage (22) sont disposées à distance l'une de l'autre.

6. Dispositif selon l'une des revendications 1 à 5,
**caractérisé en ce que**
le premier segment de couplage (21) et le deuxième segment de couplage (22) sont creux et présentent chacun un réceptacle (26, 27) pour l'extrémité de l'arbre (12), respectivement pour l'extrémité de l'arbre de commande (11).

7. Dispositif selon l'une des revendications 1 à 6,
**caractérisé en ce que**
le premier segment de couplage (21) et le deuxième segment de couplage (22) présente chacun, à une extrémité opposée au segment de couplage (21, 22) opposé, un épaulement radial (24) entre lesquels la douille (23) est montée, et **en ce que** la longueur de ladite douille (23) est choisie de telle manière que le premier segment de couplage (21) et le deuxième segment de couplage (22) soient distancés l'un de l'autre d'un intervalle prédéterminé.

8. Dispositif selon l'une des revendications 1 à 7,
**caractérisé en ce que**
la surface extérieure du manteau du premier élément de couplage (22), d'une part, et la surface intérieure du manteau de la douille, d'autre part, présentent une denture (29) correspondant à l'autre de sorte que le mouvement de rotation de l'arbre de commande (11) puisse être transmis sans jeu à l'arbre (12) du rouleau de transport (10) par l'intermédiaire de la douille (23).

9. Dispositif selon l'une des revendications 1 à 8,
**caractérisé en ce que**
la douille (23) est de conception flexible et / ou élastique.

10. Dispositif selon l'une des revendications 1 à 9,
**caractérisé en ce que**,
à chacun des rouleaux de transport (10) d'une paire de rouleaux de transport (1) est associée une unité de couplage (20) de sorte que lesdits rouleaux de transport (10) puissent être déplacés à l'écart l'un de l'autre de manière régulière, par les légumes transportés.

11. Dispositif selon l'une des revendications 1 à 10,
**caractérisé en ce que**,
à chaque rouleau de transport (10), est associée une unité mécanique ou pneumatique (30) exerçant une force de pression.

12. Dispositif selon l'une des revendications 1 à 11,
**caractérisé en ce que**
l'unité de pression (30) comprend une unité piston-cylindre (32) ou un ressort précontraint (33).

13. Dispositif selon l'une des revendications 1 à 12,
**caractérisé en ce que**,
à la paire de rouleaux de transport (1), est associé au moins un détecteur pour la génération d'un signal à transmettre à une unité de commande de sorte à actionner une unité de coupe agencée en aval pour l'épluchage des légumes de forme allongée et / ou pour exciter une unité de coupe (2) agencée en aval pour la coupe d'une extrémité antérieure et / ou postérieure des légumes de forme allongée.
